# EUROPÄISCHE PATENTANMELDUNG

(11) **EP 2 688 030 A1**
(43) Veröffentlichungstag der Anmeldung: **22.01.2014**
(21) Anmeldenummer: 13176909.3
(22) Anmeldetag: 17.07.2013
(51) Int. Cl.: G06Q 30/02

(54) **Bestimmung von Passantenfrequenzdaten**

(30) Priorität: 18.07.2012 DE 102012106524
(71) Anmelder: Vodafone Holding GmbH, 40549 Düsseldorf (DE)
(72) Erfinder: Schaedlich, Stephan, 41464 Neuss (DE)
(74) Vertreter: Ring & Weisbrodt

(57) **Zusammenfassung**

Um ein Verfahren zur zumindest teilautomatischen Bestimmung von Passantenfrequenzdaten für wenigstens einen geographischen Ort bereitszustellen, wird mit der vorliegenden Erfindung vorgeschlagen, dass aus einer Passantenfrequenzdaten-Datenbank (1), in welcher zu einem vorhergehenden Zeitpunkt für einzelne geographische Orte Passantenfrequenzdaten erfasst wurden, Passentenfrequenzdaten für den wenigstens einen geographischen Ort abgefragt werden, aus einer Netzperformanzdaten-Datenbank (2), in welcher für einzelne Funkzellen (Z01 bis Z08) eines Mobilfunknetzes (M) bzw. für einzelne für diese Funkzellen (Z01 bis Z08) zuständige Sende-/Empfangsstationen des Mobilfunknetzes (M) Netzperformanzdaten der Funkzellen (Z01 bis Z08) bzw. der für diese Funkzellen (Z01 bis Z08) zuständigen Sende-/Empfangsstationen erfasst sind, Netzperformanzdaten der dem wenigstens einen geographischen Ort zugeordneten Funkzelle (Z01 bis Z08) bzw. der für diese Funkzelle (Z01 bis Z08) zuständigen Sende-/Empfangsstation abgefragt werden, für den wenigstens einen geographischen Ort die aus der Passantenfrequenzdaten-Datenbank (1) abgefragten Passantenfrequenzdaten und die aus der Netzperformanzdaten-Datenbank (2) abgefragten Netzperformanzdaten miteinander korreliert werden und die durch Korrelation (K) erzeugten Daten als Passantenfrequenzdaten für den wenigstens einen geographischen Ort bestimmt werden.

## Beschreibung

Die vorliegende Erfindung betrifft ein Verfahren zur zumindest teilautomatischen Bestimmung von Passantenfrequenzdaten für wenigstens einen geographischen Ort.

Gegenstand der vorliegenden Erfindung ist ferner ein System zur zumindest teilautomatischen Bestimmung von Passantenfrequenzdaten für wenigstens einen geografischen Ort, wobei die Einrichtungen und/oder Mittel des Systems vorzugsweise jeweils zur Ausführung jedes einzelnen seitens derselben durchzuführenden Verfahrensschrittes eines erfindungsgemäßen Verfahrens ausgebildet und/oder eingerichtet sind.

Mit Passantenfrequenz bzw. Passantenfrequenzdaten wird insbesondere die Anzahl von Personen bezeichnet, die in einem bestimmten Zeitraum einen bestimmten geographischen Ort passiert. Passantenfrequenzdaten werden insbesondere zur Bewertung von geographischen Orten hinsichtlich einer Vermarktung von Waren und/oder Dienstleistungen verwendet. Die Zielrichtung der Bewertung kann dabei durch die jeweilige Marketingfunktion geprägt sein und neben der Vermarktung von Waren und/oder Dienstleistungen insbesondere auch die Bereiche Beschaffung, Produktion, Verwaltung und/oder Personal mit einschließen. Mit Hilfe von Passantenfrequenzdaten werden so beispielsweise Indikatoren zur Bestimmung des Marktwerts von Grundstücken bzw. Immobilien ermittelt, insbesondere hinsichtlich der Lage eines Einzelhandelsgeschäftes an einer Straße oder in einem Einkaufszentrum oder hinsichtlich der Attraktivität bzw. Eignung eines Standortes für Werbeflächen. Eine weitere Anwendung ist beispielsweise die Funknetzplanung eines Mobilfunknetzes.

Bisher werden Passantenfrequenzdaten in der Regel durch Zählung von Personen, die einen bestimmten geographischen Ort passieren, bestimmt. Üblich sind hier beispielsweise Handzählungen, Lichtschranken oder dergleichen. Um eine Vergleichbarkeit der Ergebnisse für verschiedene geographische Orte gewährleisten zu können, ist es erforderlich, Einflussgrößen wie Wetter, Jahreszeit und/oder saisonale Schwankungen bzw. Ereignisse, beispielsweise Ferienzeiten, Festivitäten oder dergleichen, zu berücksichtigen. Die Bestimmung von Passantenfrequenzdaten erfolgt daher nach Möglichkeit am selben Wochentag zur selben Zeit, bei gleichem Wetter und/oder dergleichen Einflüsse.

Aus entsprechend bestimmten Passantenfrequenzdaten lassen sich sogenannte Frequenzatlanten erstellen, die für bestimmte geographische Orte prognostizieren, wie viele Personen dort entlanggehen oder -fahren. Derartige Frequenzatlanten weisen statische Daten auf, wobei bestimmten geographischen Orten eine durchschnittliche Passantenfrequenz mit einer Auflösung nach Tagen zugeordnet ist. So liefert beispielsweise der am Frauenhofer-Institut für intelligente Analyse- und Informationssysteme (IAIS) für den Fachverband Außenwerbung (FAW) zur Bewertung von Plakatstandorten entwickelte Frequenzatlas für jeden der etwa 6,5 Millionen Straßenabschnitte in der Bundesrepublik Deutschland einen einzigen Wert (Tageswert), nämlich die durchschnittliche Passantenfrequenz für eine durchschnittliche Stunde von Montag bis Freitag zwischen 8:00 Uhr und 20:00 Uhr. Eine Berücksichtigung von Nachtstunden und/oder Wochenenden ist bei diesem statischen Frequenzatlas nicht gegeben. Insofern sind die bisher bekannten Frequenzatlanten insbesondere hinsichtlich der zeitlichen Auflösung von Passantenfrequenzdaten beschränkt. Eine Verbesserung der Auflösung ist bisher nur durch einen wesentlich größeren Aufwand, insbesondere Personalaufwand, bei der Erfassung der Passantenfrequenzdaten erzielbar.

Neben den insofern bisher gegebenen Beschränkungen ist ferner nachteilig, dass bei der bisher gegebenen Bestimmung von Passantenfrequenzdaten neben einer Beeinflussung derselben durch Messfehler, beispielsweise durch schlechtes Wetter, Baustellen und/oder dergleichen Verzerrungen der Passantenfrequenzdaten bewirkende Umstände, entsprechende Daten nur sporadisch und in periodischen Zeitabschnitten erhoben werden, beispielsweise nur zweijährlich oder dergleichen. Letztendlich wird hierdurch die Qualität der Passantenfrequenzdaten selbst als auch die Qualität der auf diesen Passantenfrequenzdaten beruhenden Analysen und/oder Prognosen negativ beeinflusst.

Der vorliegenden Erfindung liegt in Anbetracht dieses Standes der Technik die Aufgabe zugrunde, die Bestimmung von Passantenfrequenzdaten für geographische Orte zu verbessern. Dabei soll insbesondere die Bestimmung der Passantenfrequenzdaten selbst vereinfacht und die Qualität der Passantenfrequenzdaten im Hinblick auf Analyse- und/oder Prognosemöglichkeiten gesteigert werden.

Zur technischen Lösung wird mit der vorliegenden Erfindung ein Verfahren zur zumindest teilautomatischen Bestimmung von Passantenfrequenzdaten für wenigstens einen geographischen Ort vorgeschlagen, wobei
aus einer Passantenfrequenzdaten-Datenbank,
in welcher zu einem vorhergehenden Zeitpunkt für einzelne geographische Orte Passantenfrequenzdaten erfasst wurden,
Passantenfrequenzdaten für den wenigstens einen geographischen Ort abgefragt werden,
aus einer Netzperformanzdaten-Datenbank,
in welcher für einzelne Funkzellen eines Mobilfunknetzes bzw. für einzelne für diese Funkzellen zuständige Sende-/Empfangsstationen des Mobilfunknetzes Netzperformanzdaten der Funkzellen bzw. der für diese Funkzellen zuständigen Sende-/Empfangsstationen erfasst sind,
Netzperformanzdaten der dem wenigstens einen geographischen Ort zugeordneten Funkzelle bzw. der für diese Funkzelle zuständigen Sende-/Empfangsstation abgefragt werden,
für den wenigstens einen geographischen Ort
die aus der Passantenfrequenzdaten-Datenbank abgefragten Passantenfrequenzdaten und die aus der Netzperformanzdaten-Datenbank abgefragten Netzperformanzdaten miteinander korreliert werden und
die durch Korrelation erzeugten Daten als Passantenfrequenzdaten für den wenigstens einen geographischen Ort bestimmt werden.

Die Erfindung macht sich die Erkenntnis zunutze, dass eine Verbesserung der Bestimmung von Passantenfrequenzdaten für geographische Orte durch Berücksichtigung von Netzperformanzdaten eines Mobilfunknetzes, insbesondere eines Mobilfunknetzes gemäß einem GSM-, GPRS-, UMTS- und/oder LTE-Funknetzstandards (GSM: Global System for Mobile Communications; GPRS: General Packet Radio Service; UMTS: Universal Mobile Telecommunications System; LTE: Long Term Evolution), erzielbar ist.

Bei entsprechenden Mobilfunknetzen besteht das Funkversorgungsgebiet aus einzelnen Funkzellen, die jeweils von wenigstens einer Sende-/Empfangsstation ausgebildet werden. Der geographische Ort der jeweiligen Funkzelle bzw. der geographische Ort der jeweiligen diese Funkzelle ausbildenden Sende-/Empfangsstation des Mobilfunknetzes ist dabei zumindest seitens des Betreibers des Mobilfunknetzes bekannt. Darüber hinaus sind seitens des Mobilfunknetzes Netzperformanzdaten für einzelne Funkzellen bzw. für diese jeweils zuständigen Sende-/Empfangsstationen bekannt bzw. ermittelbar. Derartige Netzperformanzdaten der Funkzellen bzw. der für diese zuständigen Sende-/Empfangsstationen umfassen dabei insbesondere Informationen hinsichtlich der Art und/oder des Umfangs von in einer Funkzelle bzw. von in der für diese Funkzelle zuständigen Sende-/Empfangsstation anfallenden Datenströme, insbesondere durch sich in den Funkzellen aufhaltende Mobilfunkteilnehmer durch Mobilfunkkommunikationen, insbesondere Telefongespräche verursachte Datenströme. Aus den Netzperformanzdaten einer Funkzelle bzw. der für diese zuständigen Sende-/Empfangsstation lassen sich insofern quantifizierte Informationen über bzw. zu Mobilfunkteilnehmern ermitteln, insbesondere da entsprechende Netzperformanzdaten mit hohen zeitlichen Auflösungen erfassbar bzw. bestimmbar sind, beispielsweise mit stündlicher Auflösung.

Erfindungsgemäß werden für den wenigstens einen geographischen Ort, für welchen eine zumindest teilautomatische Bestimmung von Passantenfrequenzdaten erfolgen soll, Passantenfrequenzdaten aus einer vorhandenen Passantenfrequenzdaten-Datenbank mit Netzperformanzdaten aus einer Netzperformanzdaten-Datenbank miteinander korreliert und die durch Korrelation erzeugten Daten dann als Passantenfrequenzdaten für den wenigstens einen geographischen Ort bestimmt.

Unter Korrelation von Passantenfrequenzdaten mit Netzperformanzdaten wird erfindungsgemäß wenigstens eine Funktion verstanden, die es ermöglicht, wenigstens einen Parameter bzw. Wert für die Ähnlichkeit der Passantenfrequenzdaten und der Netzperformanzdaten zu bestimmen. Mit der Korrelationsfunktion bzw. dem Ähnlichkeitsparameter lassen sich so Passantenfrequenzdaten aus vorhandenen Passantenfrequenzdaten-Datenbanken, beispielsweise einem sogenannten Frequenzatlas, mit Netzperformanzdaten eines Mobilfunknetzes aufbereiten. Als Ähnlichkeitsparameter wird vorteilhafter Weise ein sogenannter Korrelationskoeffizient verwendet, der ein mathematisches Maß für die Stärke der Korrelation der Passantenfrequenzdaten mit den Netzperformanzdaten gibt.

Da sich die Passantenfrequenzdaten eines statischen Frequenzatlasses als eine diskrete Funktion über die Zeit und/oder den Ort und die Netzperformanzdaten als eine stetige oder diskrete Funktion über die Zeit und/oder den Ort abbilden bzw. interpretieren lassen, kommen als Korrelationsfunktion vorteilhafter Weise eine Fourier-Transformation, eine Hilbert-Transformation, eine Autokorrelation, eine Kreuzkorrelation, eine Faltung und/oder Kombinationen derselben in Frage.

Eine vorteilhafte Ausgestaltung der Erfindung sieht vor, dass
aus der Passantenfrequenzdaten-Datenbank Passantenfrequenzdaten für den wenigstens einen geographischen Ort abgefragt werden,
aus einer Mobilfunknetzfunkzellen-Datenbank,
in welcher erfasst ist, welche Funkzelle des Mobilfunknetzes bzw. welche für diese Funkzelle zuständige Sende-/Empfangsstation des Mobilfunknetzes sich an welchem geographischen Ort befindet, abgefragt wird, welche Funkzelle bzw. welche für diese Funkzelle zuständige Sende-/Empfangsstation dem wenigstens einen geographischen Ort zugeordnet ist,
aus der Netzperformanzdaten-Datenbank Netzperformanzdaten der aus der Mobilfunknetzfunkzellen-Datenbank abgefragten Funkzelle bzw. der für diese Funkzelle zuständigen Sende-/Empfangsstation abgefragt werden,
für den wenigstens einen geographischen Ort
die aus der Passantenfrequenzdaten-Datenbank abgefragten Passantenfrequenzdaten und die aus der Netzperformanzdaten-Datenbank abgefragten Netzperformanzdaten miteinander korreliert werden, und
die durch Korrelation erzeugten Daten als Passantenfrequenzdaten für den wenigstens einen geographischen Ort bestimmt werden.

Vorteilhafterweise werden in der Passantenfrequenzdaten-Datenbank statische Passantenfrequenzdaten bereitgehalten. Eine bevorzugte Ausgestaltung der Erfindung sieht die Verwendung von wenigstens einem Frequenzatlas als Passantenfrequenzdaten-Datenbank vor, insbesondere den am Frauenhofer-Institut für intelligente Analyse- und Informationssysteme (IAIS) für den Fachverband Außenwerbung (FAW) zur Bewertung von Plakatstandorten entwickelten Frequenzatlas, oder dergleichen Frequenzatlas.

Eine weitere vorteilhafte Ausgestaltung der Erfindung sieht vor, dass in der Netzperformanzdaten-Datenbank Netzperformanzdaten bereitgehalten werden, die keine Bestimmung von personenbezogenen Informationen einzelner Mobilfunkteilnehmer ermöglichen. So werden vorteilhafterweise ansonsten mitunter gegebene datenschutzrechtliche Probleme vermieden und bleibt die Privatsphäre einzelner Mobilfunkteilnehmer gewahrt. Vorteilhafterweise werden in der Netzperformanzdaten-Datenbank Netzperformanzdaten bereitgehalten, die weder Rückschlüsse auf absolute Mobilfunkteilnehmerzahlen noch auf bestimmte Mobilfunkteilnehmer ermöglichen.

Gemäß einem weiteren vorteilhaften Vorschlag der Erfindung weisen die Netzperformanzdaten Informationen über das Gesprächs- bzw. Datenvolumen der Funkzelle bzw. der für diese Funkzelle zuständigen Sende-/Empfangsstation auf, insbesondere zeitlich, vorzugsweise stündlich, halbstündlich und/oder viertelstündlich aufgelöste Informationen über das Gesprächs- bzw. Datenvolumen der Funkzelle bzw. der für diese Funkzelle zuständigen Sende-/Empfangsstation.

Eine konkrete Ausgestaltung der Erfindung ist vorteilhafterweise gekennzeichnet durch eine Nutzung von P16-Daten bzw. P16-Parametern der Funkzelle bzw. der für diese Funkzelle zuständigen Sende-/Empfangsstation als Netzperformanzdaten. Die P16-Daten bzw. -Parameter geben dabei das in einer einzelnen Funkzelle des Mobilfunknetzes pro Stunde angefallene Gesprächsvolumen in Erlang an. Erlang ist eine insbesondere in der Verkehrstheorie verwendete Hilfsmaßeinheit für den Verkehr in einem Kommunikationsnetz. Ein Erlang entspricht der dauerhaften vollen Auslastung eines Nachrichtenkanals oder einer anderen Ressource eines Kommunikationsnetzes. Die P16-Daten bzw. -Parameter resultieren dabei aus den für die jeweilige Funkzelle des Mobilfunknetzes gemessenen Gesprächsvolumenwerten. Dabei kommt ein Wert von einem Erlang zustande, wenn ein der Funkzelle bzw. der für diese zuständigen Sende-/Empfangsstation zugewiesener Zeitschlitz eines für eine Kommunikation benötigten Frequenzkanals für eine Stunde belegt ist. Dabei ist anhand der P16-Daten bzw. - Parameter selbst nicht feststellbar, ob eine Person als Mobilfunkteilnehmer eine Stunde telefoniert hat oder zwei Personen jeweils eine halbe Stunde. Die P16-Daten bzw. -Parameter lassen dementsprechend selbst keinen Rückschluss auf absolute Mobilfunkteilnehmerzahlen oder auf bestimmte Mobilfunkteilnehmer zu.

Eine weitere vorteilhafte Ausgestaltung der Erfindung ist dadurch gekennzeichnet, dass die für den wenigstens einen geographischen Ort durch Korrelation erzeugten Passantenfrequenzdaten mit für den wenigstens einen geographischen Ort relevanten demographischen Daten korreliert werden und die durch Korrelation der Passantenfrequenzdaten mit den demographischen Daten erzeugten Daten als Passantenfrequenzdaten bestimmt werden. Die demographischen Daten werden dabei vorteilhafterweise seitens einer Datenbank für demographische Daten bereitgehalten, beispielsweise von Drittanbietern wie Marktforschungsunternehmen oder dergleichen.

Eine besonders vorteilhafte Ausgestaltung der Erfindung sieht vor, dass die durch Korrelation erzeugten Passantenfrequenzdaten für eine nachfolgende zumindest teilautomatische Bestimmung von Passantenfrequenzdaten für wenigstens einen geographischen Ort als Passantenfrequenzdaten der Passantenfrequenzdaten-Datenbank genutzt werden. Erfindungsgemäß wird so vorteilhafterweise eine weitere Verbesserung der Qualität von zu bestimmenden Passantenfrequenzdaten erzielt. Vorteilhafterweise werden entsprechend durch Korrelation erzeugte Passantenfrequenzdaten in einer Datenbank gespeichert, welche zusätzlich zu der insbesondere statische Passantenfrequenzdaten bereithaltenden Passantenfrequenzdaten-Datenbank als Passantenfrequenzdaten-Datenbank genutzt werden kann, beispielsweise für eine zu einem späteren Zeitpunkt durchzuführende Bestimmung von Passantenfrequenzdaten.

Vorteilhafterweise erfolgt die Korrelation der aus der Passantenfrequenzdaten-Datenbank abgefragten Passantenfrequenzdaten mit den aus der

Netzperformanzdaten-Datenbank abgefragten Netzperformanzdaten seitens einer Recheneinrichtung des Mobilfunknetzes und/oder erfolgt die Korrelation der durch Korrelation erzeugten Passantenfrequenzdaten mit demographischen Daten seitens einer Recheneinrichtung des Mobilfunknetzes.

Gemäß einem weiteren vorteilhaften Vorschlag der Erfindung erfolgt die Korrelation der Passantenfrequenzdaten mit den Netzperformanzdaten derart, dass im Rahmen von auf diesen durch Korrelation erzeugten Passantenfrequenzdaten beruhenden Analysen und/oder Prognosen Informationen hinsichtlich der Bewegungsrichtungen von Mobilfunkteilnehmern bzw. Passanten bestimmbar sind. Vorteilhafterweise werden dazu beispielsweise Informationen zu durch sich bewegende Mobilfunkteilnehmer verursachte Verbindungsübergaben, sogenannte Handover, einzelner Funkzellen erfasst und vorteilhafterweise ergänzend als Netzperformanzdaten genutzt. Durch die Bestimmung der Bewegungsrichtungen von Mobilfunkteilnehmern lässt sich so die Qualität der auf durch Korrelation erzeugten Passantenfrequenzdaten beruhenden Analysen und/oder Prognosen weiter verbessern.

Zur technischen Lösung der eingangs genannten Aufgabe wird mit der vorliegenden Erfindung ferner ein System zur zumindest teilautomatischen Bestimmung von Passantenfrequenzdaten für wenigstens einen geographischen Ort vorgeschlagen, wobei die Einrichtungen und/oder Mittel des Systems vorzugsweise jeweils zur Ausführung jedes einzelnen seitens derselben durchzuführenden Verfahrensschrittes eines erfindungsgemäßen Verfahrens ausgebildet und/oder eingerichtet sind, aufweisend
eine Passantenfrequenzdaten-Datenbank, in welcher für einzelne geographische Orte Passantenfrequenzdaten erfasst sind,
eine Netzperformanzdaten-Datenbank, in welcher für einzelne Funkzellen eines Mobilfunknetzes bzw. für einzelne für diese Funkzellen zuständige Sende-/Empfangsstationen des Mobilfunknetzes Netzperformanzdaten der Funkzellen bzw. der für diese Funkzellen zuständigen Sende-/Empfangsstationen erfasst sind,
Mittel zur Abfrage von Passantenfrequenzdaten für den wenigstens einen geographischen Ort aus der Passantenfrequenzdaten-Datenbank,
Mittel zur Abfrage von Netzperformanzdaten der dem wenigstens einen geographischen Ort zugeordneten Funkzelle bzw. der für diese Funkzelle zuständigen Sende-/Empfangsstation aus der Netzperformanzdaten-Datenbank,
Mittel zur Korrelation der aus der Passantenfrequenzdaten-Datenbank abgefragten Passantenfrequenzdaten mit den aus der Netzperformanzdaten-Datenbank abgefragten Netzperformanzdaten, und
Mittel zur Bestimmung der durch Korrelation erzeugten Daten als Passantenfrequenzdaten für den wenigstens einen geographischen Ort.

Das System weist gemäß einer vorteilhaften Ausgestaltung der Erfindung ferner auf
eine Mobilfunknetzfunkzellen-Datenbank,
in welcher erfasst ist, welche Funkzelle des Mobilfunknetzes bzw. welche für diese Funkzelle zuständige Sende-/Empfangsstation des Mobilfunknetzes sich an welchem geographischen Ort befindet, und
Mittel zur Abfrage dem der wenigstens einen geographischen Ort zugeordneten Funkzelle bzw. der für diese Funkzelle zuständigen Sende-/Empfangsstation.

Gemäß einer weiteren vorteilhaften Ausgestaltung der Erfindung weist das System ferner auf
eine Datenbank mit demographischen Daten,
Mittel zur Abfrage von demographischen Daten aus der Datenbank und
Mittel zur Korrelation der durch Korrelation erzeugten Passantenfrequenzdaten mit demographischen Daten.

Das erfindungsgemäße System ist vorteilhafterweise dadurch gekennzeichnet, dass die Passantenfrequenzdaten-Datenbank eine über das Mobilfunknetz zugängliche Datenbank ist, die Netzperformanzdaten-Datenbank eine Datenbank des Mobilfunknetzes ist, das Mittel zur Abfrage der Passantenfrequenzdaten aus der Passantenfrequenzdaten-Datenbank und/oder das Mittel zur Abfrage von Netzperformanzdaten aus der Netzperformanzdaten-Datenbank von einer Einrichtung des Mobilfunknetzes ausgebildet bzw. bereitgestellt ist, das Mittel zur Korrelation der aus der Passantenfrequenzdaten-Datenbank abgefragten Passantenfrequenzdaten mit den aus der Netzperformanzdaten-Datenbank abgefragten Netzperformanzdaten von einer Einrichtung des Mobilfunknetzes ausgebildet bzw. bereitgestellt ist, und das Mittel zur Bestimmung der durch Korrelation erzeugten Daten als Passantenfrequenzdaten für den wenigstens einen geographischen Ort von wenigstens einer Einrichtung des Mobilfunknetzes ausgebildet bzw. bereitgestellt ist.

Eine weitere Ausgestaltung der Erfindung sieht vor, dass die Datenbank mit demographischen Daten eine über das Mobilfunknetz zugängliche Datenbank ist, das Mittel zur Abfrage von demographischen Daten aus der Datenbank von einer Einrichtung des Mobilfunknetzes ausgebildet bzw. bereitgestellt ist, und das Mittel zur Korrelation der durch Korrelation erzeugten Passantenfrequenzdaten mit demographischen Daten von einer Einrichtung des Mobilfunknetzes ausgebildet bzw. bereitgestellt ist.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1:: in einer schematischen Prinzipdarstellung ein Ausführungsbeispiel für ein erfindungsgemäßes System zur zumindest teilautomatischen Bestimmung von Passantenfrequenzdaten für wenigstens einen geographischen Ort, mit einem Ausführungsbeispiel für in einer Passantenfrequenzdaten-Datenbank bereitgehaltenen Passantenfrequenzdaten;
- Fig. 2:: in einer schematischen Prinzipdarstellung das erfindungsgemäße System nach Fig. 1, mit einem Ausführungsbeispiel für in einer Netzperformanzdaten-Datenbank erfasste Netzperformanzdaten;
- Fig. 3:: in einer schematischen Prinzipdarstellung das erfindungsgemäße System nach Fig. 1 bzw. Fig. 2, mit einem ersten Ausführungsbeispiel für erfindungsgemäß durch Korrelation erzeugte Passantenfrequenzdaten; und
- Fig. 4:: in einer schematischen Prinzipdarstellung das erfindungsgemäße System nach Fig. 1 bzw. Fig. 2, mit einem zweiten Ausführungsbeispiel für erfindungsgemäß durch Korrelation erzeugte Passantenfrequenzdaten.

Die Figuren zeigen ein erfindungsgemäßes System zur zumindest teilautomatischen Bestimmung von Passantenfrequenzdaten für wenigstens einen geographischen Ort.

Das System weist eine Passantenfrequenzdaten-Datenbank 1 auf, in welcher für einzelne geographische Orte Passantenfrequenzdaten erfasst sind. Bei den in der Passantenfrequenzdaten-Datenbank 1 bereitgehaltenen Passantenfrequenzdaten handelt es sich vorliegend um einen statischen Frequenzatlas, der für jeden Straßenabschnitt der Bundesrepublik Deutschland einen einzigen Wert liefert, vorliegend beispielsweise die durchschnittliche Passantenfrequenz für eine durchschnittliche Stunde von Montag bis Freitag zwischen 8:00 Uhr und 20:00 Uhr. Die in der Passantenfrequenzdaten-Datenbank 1 bereitgehaltenen Passantenfrequenzdaten sind beispielsweise von Drittanbietern durch händische Zählungen an verschiedenen Messstellen erfasst und in der Passantenfrequenzdaten-Datenbank 1 gespeichert.

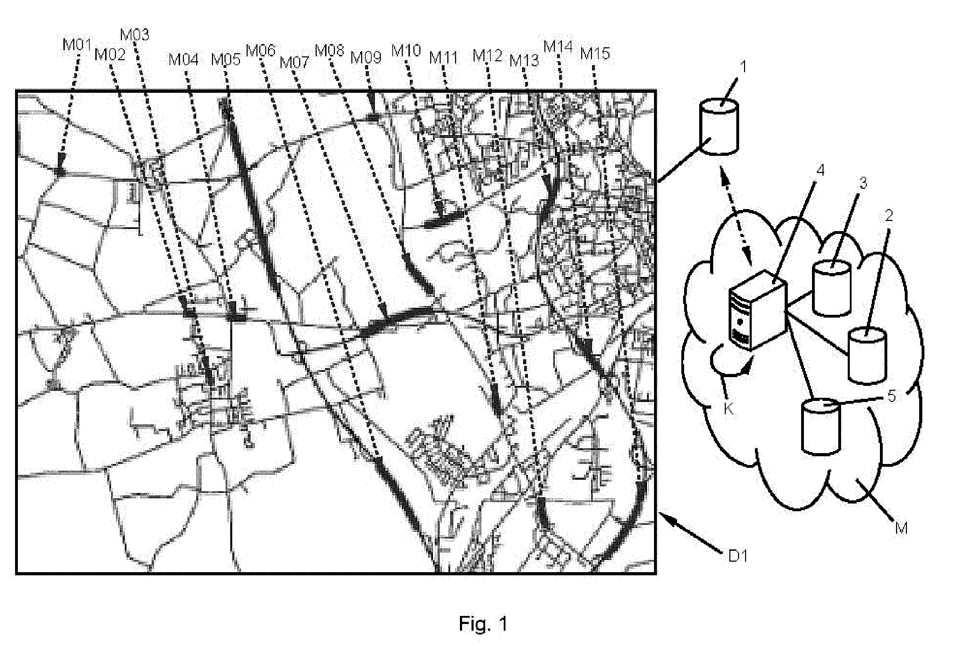

Fig. 1 zeigt ein Ausführungsbeispiel für in der Passantenfrequenzdaten-Datenbank 1 für verschiedene geographische Orte eines bestimmten geographischen Gebiets erfasste Passantenfrequenzdaten. Der in Fig. 1 mit dem Bezugszeichen D1 versehene Pfeil zeigt dabei eine graphisch aufbereitete Darstellung der in der Passantenfrequenzdaten-Datenbank 1 bereitgehaltenen Passantenfrequenzdaten. Eine solche graphisch aufbereitete Darstellung D1 der in der Passantenfrequenzdaten-Datenbank 1 bereitgehaltenen Passantenfrequenzdaten ist insbesondere seitens der Anzeigeeinrichtung einer Recheneinrichtung wiedergebbar, beispielsweise im Rahmen der erfindungsgemäßen Bestimmung von Passantenfrequenzdaten selbst und/oder im Rahmen einer solche Passantenfrequenzdaten nutzenden Analyse und/oder Prognose hinsichtlich einer Vermarktung von Waren und/oder Dienstleistungen. Die jeweiligen Messstellen an den verschiedenen geographischen Orten sind in Fig. 1 beispielhaft mit M01 bis M15 gekennzeichnet und umfassen neben einzelnen geographischen Orten, wie beispielsweise dem der Messstelle M01, auch ganze Straßenzüge als geographische Orte, wie beispielsweise denen der Messstelle M05 oder M06.

Weiter weist das System eine Netzperformanzdaten-Datenbank 2 auf, in welcher für einzelne Funkzellen eines Mobilfunknetzes M Netzperformanzdaten der Funkzellen erfasst sind. Bei der Netzperformanzdaten-Datenbank 2 handelt es sich um eine Datenbank eines Mobilfunknetzes M gemäß einem GSM-, GPRS-, UMTS-, und/oder LTE-Funknetzstandard, welches in den Figuren symbolisch durch eine Wolke dargestellt ist. In der Netzperformanzdaten-Datenbank 2 sind vorliegend als Netzperformanzdaten sogenannte P16-Daten bzw. -Parameter einzelner Funkzellen des Mobilfunknetzes M erfasst. Die P16-Daten bzw. - Parameter geben dabei das in einer einzelnen Funkzelle des Mobilfunknetzes M pro Stunde angefallene Gesprächsvolumen in Erlang an. Die P16 bzw. -Parameter resultieren dabei aus den für die jeweilige Funkzelle des Mobilfunknetzes M gemessenen Gesprächsvolumenwerten. Dabei ist anhand der P16-Daten bzw. - Parameter selbst nicht feststellbar, ob eine Person als Mobilfunkteilnehmer eine Stunde telefoniert hat oder zwei Personen jeweils eine halbe Stunde. Die P16-Daten bzw. -Parameter lassen dementsprechend selbst keinen Rückschluss auf absolute Mobilfunkteilnehmerzahlen oder auf bestimmte Mobilfunkteilnehmer zu, so dass die Privatsphäre einzelner Mobilfunkteilnehmer gewahrt bleibt und datenschutzrechtliche Probleme vermieden werden.

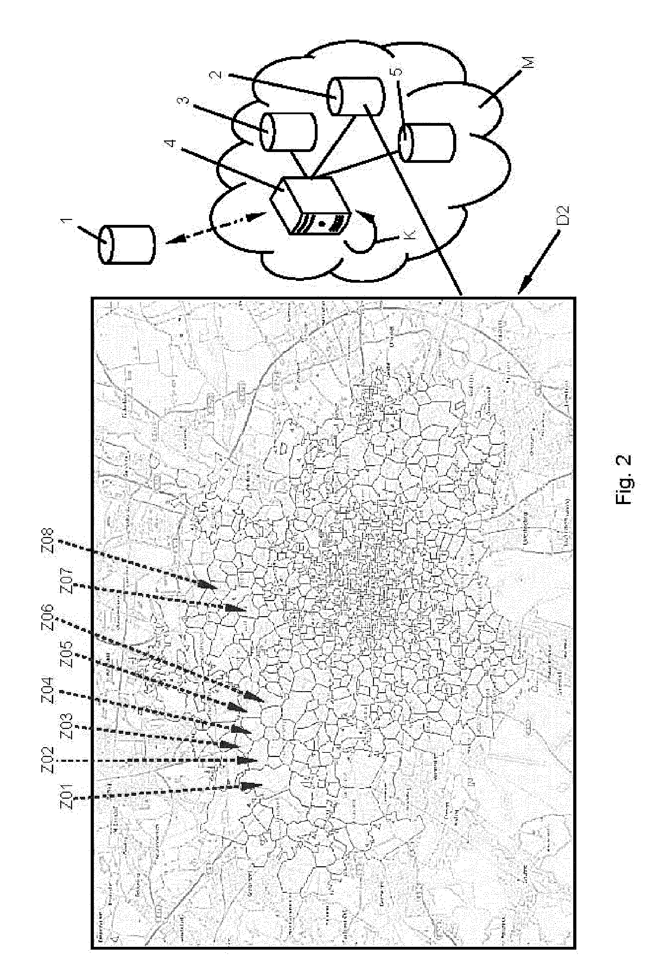

Fig. 2 zeigt ein Ausführungsbeispiel für in der Netzperformanzdaten-Datenbank 2 für Funkzellen des Mobilfunknetzes M eines bestimmten geographischen Gebiets erfasste Netzperformanzdaten. Der in Fig. 2 mit dem Bezugszeichen D2 versehene Pfeil zeigt dabei eine graphisch aufbereitete Darstellung der in der Netzperformanzdaten-Datenbank 2 bereitgehaltenen Netzperformanzdaten. Eine solche graphisch aufbereitete Darstellung D2 der in der Netzperformanzdaten-Datenbank 2 bereitgehaltenen Netzperformanzdaten ist insbesondere seitens der Anzeigeeinrichtung einer Recheneinrichtung wiedergebbar, beispielsweise im Rahmen der erfindungsgemäßen Bestimmung von Passantenfrequenzdaten selbst und/oder im Rahmen einer solche Passantenfrequenzdaten nutzenden Analyse und/oder Prognose hinsichtlich einer Vermarktung von Waren und/oder Dienstleistungen. Aus Gründen der Übersichtlichkeit sind in Fig. 2 beispielhaft mit Z01 bis Z08 einzelne Funkzellen des Mobilfunknetzes gekennzeichnet. Anhand der graphischen Darstellung D2 ist ferner erkennbar, dass die Anzahl und/oder die Größe einzelner Funkzellen des Mobilfunknetzes M an verschiedenen geographischen Orten unterschiedlich sind. So weisen Mobilfunknetze für Ballungsgebiete in der Regel eine größere Anzahl kleinerer Funkzellen auf, während ländliche Regionen eine geringere Anzahl größerer Funkzellen aufweisen.

Das System weist ferner eine Mobilfunknetzfunkzellen-Datenbank 3 auf, in welcher erfasst ist, welche Funkzelle der Funkzellen des Mobilfunknetzes M bzw. welche für diese Funkzelle zuständige Sende-/Empfangsstation des Mobilfunknetzes M sich an welchem geographischen Ort befindet. Die Mobilfunknetzfunkzellen-Datenbank 3 ist vorliegend eine Datenbank des Mobilfunknetzes M.

Darüber hinaus weist das System ferner eine vorliegend seitens des Mobilfunknetzes M angeordnete Recheneinrichtung 4 auf, welche mit der Netzperformanzdaten-Datenbank 2 des Mobilfunknetzes M und der Mobilfunknetzfunkzellen-Datenbank 3 des Mobilfunknetzes M verbunden bzw. verbindbar ist. Die Recheneinrichtung 4 ist darüber hinaus über das Mobilfunknetz M mit der Passantenfrequenzdaten-Datenbank 1 verbunden bzw. verbindbar (in den Figuren symbolisch durch den strichpunktierten Doppelpfeil zwischen der Recheneinrichtung 4 und der Passantenfrequenzdaten-Datenbank 1 dargestellt).

Die Recheneinrichtung 4 des Systems ist vorliegend ausgebildet und/oder eingerichtet
- ein Mittel zur Abfrage von Passantenfrequenzdaten aus der Passantenfrequenzdaten-Datenbank 1 für wenigstens einen geographischen Ort bereitzustellen,
- ein Mittel zur Abfrage von Netzperformanzdaten aus der Netzperformanzdaten-Datenbank 2 der dem geographischen Ort zugeordneten Funkzelle bzw. der für diese Funkzelle zuständigen Sende-/Empfangsstation bereitzustellen,
- ein Mittel zur Abfrage der dem geographischen Ort zugeordneten Funkzelle bzw. der für diese Funkzelle zuständigen Sende-/Empfangsstation aus der Mobilfunknetzfunkzellen-Datenbank 3 bereitzustellen,
- ein Mittel zur Korrelation der aus der Passantenfrequenzdaten-Datenbank 1 abgefragten Passantenfrequenzdaten mit den aus der Netzperformanzdaten-Datenbank 2 abgefragten Netzperformanzdaten bereitzustellen, und
- ein Mittel zur Bestimmung der durch Korrelation erzeugten Daten als Passantenfrequenzdaten für den geographischen Ort bereitzustellen.

Das System weist ferner eine mit der Recheneinrichtung 4 verbundene bzw. verbindbare Datenbank 5 auf, in welcher vorliegend die als Passantenfrequenzdaten bestimmten, durch Korrelation erzeugten Daten für den jeweiligen geographischen Ort gespeichert und bereitgehalten werden. Vorliegend ist die Datenbank 5 eine seitens des Mobilfunknetzes M bereitgehaltene Datenbank, welche beispielsweise für eine Bewertung von geographischen Orten hinsichtlich einer Vermarktung von Waren und/oder Dienstleistungen zugänglich ist, beispielsweise für Drittanwender oder dergleichen.

Die erfindungsgemäße Bestimmung von Passantenfrequenzdaten für wenigstens einen geographischen Ort wird wie folgt realisiert:

Die Recheneinrichtung 4 initiiert für den wenigstens einen geographischen Ort, dessen Passantenfrequenzdaten bestimmt werden sollen, eine Abfrage der Passantenfrequenzdaten-Datenbank 1 und eine Abfrage der Mobilfunknetzfunkzellen-Datenbank 3.

Die Mobilfunknetzfunkzellen-Datenbank 3 liefert der Recheneinrichtung 4 als Antwort auf die Datenbankabfrage eine Information über die sich an dem wenigstens einen geographischen Ort befindende Funkzelle und/oder eine Information über die für diese Funkzelle zuständige Sende-/Empfangsstation des Mobilfunknetzes M. Mit der Information über die sich an den wenigstens einen geographischen Ort befindende Funkzelle bzw. der für diese Funkzelle zuständigen Sende-/Empfangsstation initiiert die Recheneinrichtung 4 eine Abfrage der Netzperformanzdaten-Datenbank 2. Als Antwort auf die Datenbankabfrage liefert die Netzperformanzdaten-Datenbank 2 der Recheneinrichtung 4 die Netzperformanzdaten für die abgefragte Funkzelle bzw. der für diese zuständigen Sende-/Empfangsstation.

Anschließend werden seitens der Recheneinrichtung 4 für den wenigstens einen geographischen Ort die aus der Passantenfrequenzdaten-Datenbank 1 abgefragten Passantenfrequenzdaten und die aus der Netzperformanzdaten-Datenbank 2 abgefragten Netzperformanzdaten miteinander korreliert (in den Figuren symbolisch durch den mit den Bezugszeichen K versehenen Pfeil dargestellt) und die durch Korrelation K erzeugten Daten als Passantenfrequenzdaten für den wenigstens einen geographischen Ort bestimmt, vorliegend durch Speicherung der für den wenigstens einen geographischen Ort durch Korrelation K erzeugten Daten in der Datenbank 5.

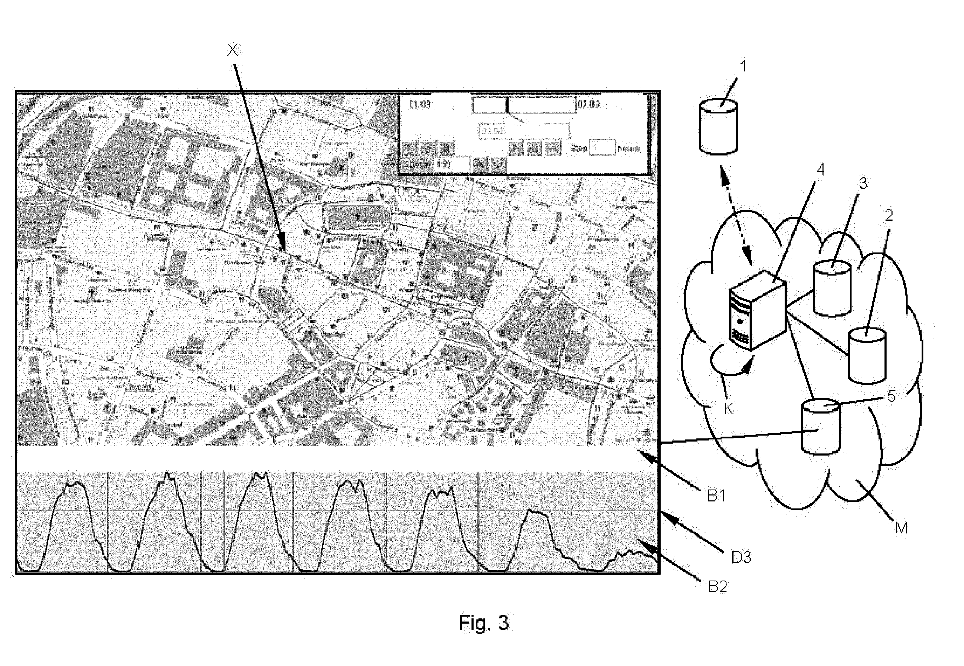

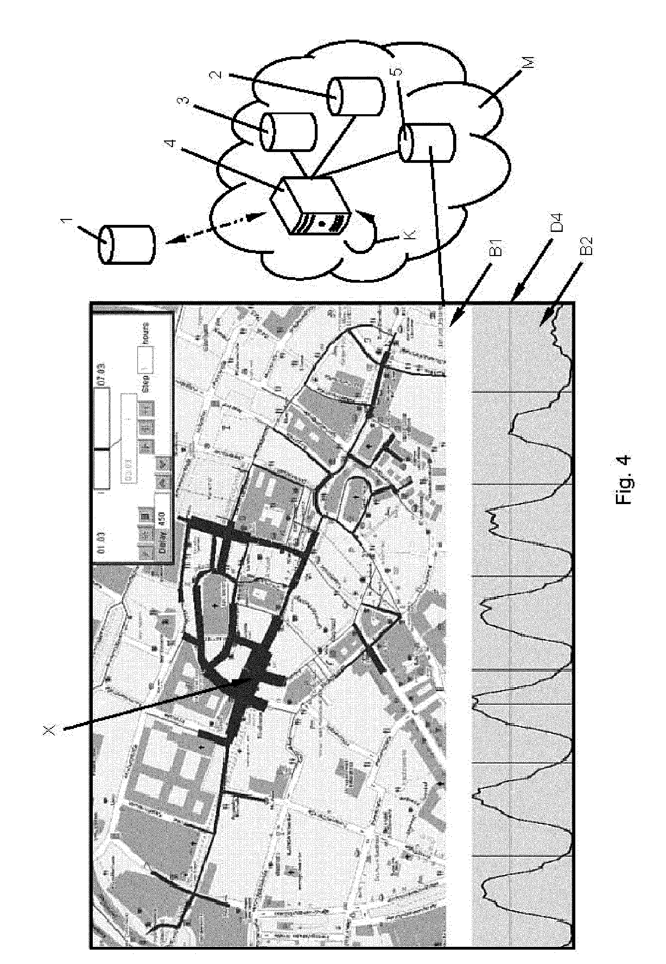

Fig. 3 und Fig. 4 zeigen jeweils ein Ausführungsbeispiel für in der Datenbank 5 für verschiedene geographische Orte eines bestimmten geographischen Gebiets erfasste, durch Korrelation K erzeugte Passantenfrequenzdaten. Der in Fig. 3 mit dem Bezugszeichen D3 und der in Fig. 4 mit dem Bezugszeichen D4 versehene Pfeil zeigt dabei eine graphisch aufbereitete Darstellung der in der Datenbank 5 bereitgehaltenen durch Korrelation K erzeugten Passantenfrequenzdaten. Eine solche graphisch aufbereitete Darstellung D3 bzw. D4 der in der Datenbank 5 bereitgehaltenen durch Korrelation K erzeugten Passantenfrequenzdaten ist insbesondere seitens der Anzeigeeinrichtung einer Recheneinrichtung wiedergebbar, beispielsweise im Rahmen der erfindungsgemäßen Bestimmung von Passantenfrequenzdaten selbst und/oder im Rahmen einer solche Passantenfrequenzdaten nutzenden Analyse und/oder Prognose hinsichtlich einer Vermarktung von Waren und/oder Dienstleistungen. Die Ausführungsbeispiele nach Fig. 3 und Fig. 4 zeigen dabei die durch Korrelation K erzeugten Passantenfrequenzdaten für das gleiche geographische Gebiet, vorliegend dem Münchner Hauptbahnhof, am gleichen Tag (1. März), jedoch zu unterschiedlichen Uhrzeiten (Fig. 3: 6:00 Uhr; Fig. 4: 15:00 Uhr). Die Darstellungen D3 und D4 weisen dabei neben einer in einem oberen Bereich B1 erfolgenden kartenförmigen Wiedergabe der durch Korrelation K erzeugten Passantenfrequenzdaten ferner in einem unteren Bereich B2 eine Wiedergabe des zeitlichen Verlaufs der Passantenfrequenz auf. In dem oberen Bereich B1 werden die jeweiligen Werte der Passantenfrequenz durch eine diesen Werten entsprechende Strichstärke repräsentiert. So ist beispielsweise anhand eines Vergleichs der Ausführungsbeispiele nach Fig. 3 und Fig. 4 erkennbar, dass die Passantenfrequenz für den mit X gekennzeichneten geographischen Ort um 6:00 Uhr (Fig. 3) geringer ist, als um 15:00 Uhr (Fig. 4).

Durch die erfindungsgemäße Korrelation der Passantenfrequenzdaten eines statischen Frequenzatlasses, in dem die Passantenfrequenzdaten für verschiedene geographische Orte als eine diskrete Funktion über die Zeit erfasst sind, mit den Netzperformanzdaten, welche für Funkzellen eines geographischen Ortes als eine stetige oder diskrete Funktion über die Zeit erfasst sind, werden mit wenigstens einer Korrelationsfunktion Passantenfrequenzdaten erzeugt bzw. bestimmt, welche vorteilhafterweise für jede Stunde und jeden Tag eines Jahres, also insbesondere auch Nachtstunden und Wochenenden, einen Wert liefert. Die Passantenfrequenzdaten der Passantenfrequenzdaten-Datenbank 1 werden insofern mit Hilfe der Netzperformanzdaten aus der Netzperfomanzdaten-Datenbank 2 zeitlich verdichtet.

Die in den Figurenzeichnungen dargestellten und die im Zusammenhang mit diesen beschriebenen Ausführungsbeispiele der Erfindung dienen lediglich der Erläuterung der Erfindung und sind für diese nicht beschränkend.

### Bezuaszeichenliste

- 1: Passantenfrequenzdaten-Datenbank
- 2: Netzperformanzdaten-Datenbank
- 3: Mobilfunknetzfunkzellen-Datenbank
- 4: Recheneinrichtung
- 5: Datenbank
- B1: oberer Bereich graphisch aufbereitete Darstellung (D1, D2, D3 bzw. D4)
- B2: unterer Bereich graphisch aufbereitete Darstellung (D1, D2, D3 bzw. D4)
- D1: graphisch aufbereitete Darstellung (Passantenfrequenzdaten-Datenbank (1))
- D2: graphisch aufbereitete Darstellung (Netzperformanzdaten-Datenbank (2))
- D3, D4: graphisch aufbereitete Darstellung (Datenbank (5))
- K: Korrelation
- M: Mobilfunknetz
- M01 bis M15: Messstellen
- X: geographischer Ort
- Z01 bis Z08: Funkzellen bzw. für diese zuständige Sende-/Empfangsstationen

## Patentansprüche

1. Verfahren zur zumindest teilautomatischen Bestimmung von Passantenfrequenzdaten für wenigstens einen geographischen Ort,
**dadurch gekennzeichnet, dass**
aus einer Passantenfrequenzdaten-Datenbank (1),
in welcher zu einem vorhergehenden Zeitpunkt für einzelne geographische Orte Passantenfrequenzdaten erfasst wurden, Passentenfrequenzdaten für den wenigstens einen geographischen Ort abgefragt werden,
aus einer Netzperformanzdaten-Datenbank (2),
in welcher für einzelne Funkzellen (Z01 bis Z08) eines Mobilfunknetzes (M) bzw. für einzelne für diese Funkzellen (Z01 bis Z08) zuständige Sende-/Empfangsstationen des Mobilfunknetzes (M) Netzperformanzdaten der Funkzellen (Z01 bis Z08) bzw. der für diese Funkzellen (Z01 bis Z08) zuständigen Sende-/Empfangsstationen erfasst sind,
Netzperformanzdaten der dem wenigstens einen geographischen Ort zugeordneten Funkzelle (Z01 bis Z08) bzw. der für diese Funkzelle (Z01 bis Z08) zuständigen Sende-/Empfangsstation abgefragt werden,
für den wenigstens einen geographischen Ort
die aus der Passantenfrequenzdaten-Datenbank (1) abgefragten Passantenfrequenzdaten und die aus der Netzperformanzdaten-Datenbank (2) abgefragten Netzperformanzdaten miteinander korreliert werden und
die durch Korrelation (K) erzeugten Daten als Passantenfrequenzdaten für den wenigstens einen geographischen Ort bestimmt werden.

2. Verfahren nach Anspruch 1, **dadurch gekennzeichnet, dass**
**dadurch gekennzeichnet, dass**
aus der Passantenfrequenzdaten-Datenbank (1) Passentenfrequenzdaten für den wenigstens einen geographischen Ort abgefragt werden,
aus einer Mobilfunknetzfunkzellen-Datenbank (3),
in welcher erfasst ist, welche Funkzelle (Z01 bis Z08) des Mobilfunknetzes (M) bzw. welche für diese Funkzelle (Z01 bis Z08) zuständige Sende-/Empfangsstation des Mobilfunknetzes (M) sich an welchem geographischen Ort befindet,
abgefragt wird, welche Funkzelle (Z01 bis Z08) bzw. welche für diese Funkzelle (Z01 bis Z08) zuständige Sende-/Empfangsstation dem wenigstens einen geographischen Ort zugeordnet ist,
aus der Netzperformanzdaten-Datenbank (2),
Netzperformanzdaten der aus der Mobilfunknetzfunkzellen-Datenbank (3) abgefragten Funkzelle (Z01 bis Z08) bzw. der für diese Funkzelle (Z01 bis Z08) zuständigen Sende-/Empfangsstation abgefragt werden,
für den wenigstens einen geographischen Ort
die aus der Passantenfrequenzdaten-Datenbank (1) abgefragten Passantenfrequenzdaten und die aus der Netzperformanzdaten-Datenbank (2) abgefragten Netzperformanzdaten miteinander korreliert werden und
die durch Korrelation (K) erzeugten Daten als Passantenfrequenzdaten für den wenigstens einen geographischen Ort bestimmt werden.

3. Verfahren nach Anspruch 1 oder Anspruch 2, **dadurch gekennzeichnet, dass** in der Passantenfrequenzdaten-Datenbank (1) statische Passantenfrequenzdaten bereitgehalten werden.

4. Verfahren nach einem der Ansprüche 1 bis 3, **dadurch gekennzeichnet, dass** in der Netzperformanzdaten-Datenbank (2) Netzperformanzdaten bereitgehalten werden, die keine Bestimmung von personenbezognenen Informationen einzelner Passanten ermöglichen.

5. Verfahren nach einem der Ansprüche 1 bis 4, **dadurch gekennzeichnet, dass** die Netzperformanzdaten Informationen über das Gesprächs- bzw. Datenvolumen der Funkzelle (Z01 bis Z08) bzw. der für diese zuständigen Sende-/Empfangsstation aufweisen, vorzugsweise zeitlich aufgelöste Informationen über das Gesprächs- bzw. Datenvolumen der Funkzelle (Z01 bis Z08) bzw. der für diese zuständigen Sende-/Empfangsstation.

6. Verfahren nach Anspruch 5, **gekennzeichnet durch** eine Nutzung von P16-Daten bzw. P16-Parametern der Funkzelle (Z01 bis Z08) bzw. der für diese zuständigen Sende-/Empfangsstation als Netzperformanzdaten.

7. Verfahren nach einem der Ansprüche 1 bis 6, **dadurch gekennzeichnet, dass** die für den wenigstens einen geographischen Ort durch Korrelation (K) erzeugten Passantenfrequenzdaten mit für den wenigstens einen geographischen Ort relevanten demographischen Daten korreliert werden und die durch Korrelation der Passantenfrequenzdaten mit den demographischen Daten erzeugten Daten als Passantenfrequenzdaten bestimmt werden.

8. Verfahren nach einem der Ansprüche 1 bis 7, **dadurch gekennzeichnet, dass** die durch Korrelation (K) erzeugten Passantenfrequenzdaten für eine nachfolgende zumindest teilautomatische Bestimmung von Passantenfrequenzdaten für wenigstens einen geographischen Ort als Passantenfrequenzdaten der Passantenfrequenzdaten-Datenbank (1) genutzt werden.

9. Verfahren nach einem der Ansprüche 1 bis 8, **dadurch gekennzeichnet, dass** die Korrelation der aus der Passantenfrequenzdaten-Datenbank (1) abgefragten Passantenfrequenzdaten mit den aus der Netzperformanzdaten-Datenbank (2) abgefragten Netzperformanzdaten und/oder die Korrelation der durch Korrelation (K) erzeugten Passantenfrequenzdaten mit demographischen Daten seitens einer Recheneinrichtung (4) des Mobilfunknetzes (M) erfolgt.

10. Verfahren nach einem der Ansprüche 1 bis 9, **dadurch gekennzeichnet, dass** die Korrelation der Passantenfrequenzdaten mit den Netzperformanzdaten derart erfolgt, dass im Rahmen von auf diesen durch Korrelation (K) erzeugten Passantenfrequenzdaten beruhenden Analysen und/oder Prognosen Informationen hinsichtlich der Bewegungsrichtungen von Mobilfunkteilnehmern bzw. Passanten bestimmbar sind.

11. System zur zumindest teilautomatischen Bestimmung von Passantenfrequenzdaten für wenigstens einen geographischen Ort, wobei die Einrichtungen und/oder Mittel des Systems vorzugsweise jeweils zur Ausführung jedes einzelnen seitens derselben durchzuführenden Verfahrensschrittes eines Verfahrens nach einem oder mehreren der Ansprüche 1 bis 10 ausgebildet und/oder eingerichtet sind,
aufweisend
eine Passantenfrequenzdaten-Datenbank (1),
in welcher für einzelne geographische Orte Passantenfrequenzdaten erfasst sind,
eine Netzperformanzdaten-Datenbank (2),
in welcher für einzelne Funkzellen (Z01 bis Z08) eines Mobilfunknetzes (M) bzw. für einzelne für diese Funkzellen (Z01 bis Z08) zuständige Sende-/Empfangsstationen des Mobilfunknetzes (M) Netzperformanzdaten der Funkzellen (Z01 bis Z08) bzw. der für diese Funkzellen (Z01 bis Z08) zuständigen Sende-/Empfangsstationen erfasst sind,
ein Mittel zur Abfrage von Passentenfrequenzdaten für den wenigstens einen geographischen Ort aus der Passantenfrequenzdaten-Datenbank (1),
ein Mittel zur Abfrage von Netzperformanzdaten der dem wenigstens einen geographischen Ort zugeordneten Funkzelle (Z01 bis Z08) bzw. der für diese Funkzelle (Z01 bis Z08) zuständigen Sende-/Empfangsstation aus der Netzperformanzdaten-Datenbank (2),
ein Mittel zur Korrelation (K) der aus der Passantenfrequenzdaten-Datenbank (1) abgefragten Passantenfrequenzdaten mit den aus der Netzperformanzdaten-Datenbank (2) abgefragten Netzperformanzdaten, und ein Mittel zur Bestimmung der durch Korrelation erzeugten Daten als Passantenfrequenzdaten für den wenigstens einen geographischen Ort.

12. System nach Anspruch 11, **dadurch gekennzeichnet, dass** dieses ferner aufweist
eine Mobilfunknetzfunkzellen-Datenbank (3),
in welcher erfasst ist, welche Funkzelle (Z01 bis Z08) des Mobilfunknetzes (M) bzw. welche für diese Funkzelle (Z01 bis Z08) zuständige Sende-/Empfangsstation des Mobilfunknetzes (M) sich an welchem geographischen Ort befindet, und
ein Mittel zur Abfrage der dem wenigstens einen geographischen Ort zugeordneten Funkzelle (Z01 bis Z08) bzw. der für diese Funkzelle (Z01 bis Z08) zuständigen Sende-/Empfangsstation.

13. System nach Anspruch 11 oder Anspruch 12, **dadurch gekennzeichnet, dass** dieses ferner aufweist
eine Datenbank mit demographischen Daten,
ein Mittel zur Abfrage von demographischen Daten aus der Datenbank und ein Mittel zur Korrelation der durch Korrelation erzeugten Passantenfrequenzdaten mit demographischen Daten.

14. System nach einem der Ansprüche 11 bis 13, **dadurch gekennzeichnet, dass** die Passantenfrequenzdaten-Datenbank (1) eine über das Mobilfunknetz (M) zugängliche Datenbank ist, die Netzperformanzdaten-Datenbank (2) eine Datenbank des Mobilfunknetzes (M) ist, das Mittel zur Abfrage der Passantenfrequenzdaten aus der Passantenfrequenzdaten-Datenbank (1) und/oder das Mittel zur Abfrage von Netzperformanzdaten aus der Netzperformanzdaten-Datenbank (2) von einer Einrichtung (4) des Mobilfunknetzes (M) ausgebildet bzw. bereitgestellt wird, das Mittel zur Korrelation (K) der aus der Passantenfrequenzdaten-Datenbank (1) abgefragten Passantenfrequenzdaten mit den aus der Netzperformanzdaten-Datenbank (2) abgefragten Netzperformanzdaten von einer Einrichtung (4) des Mobilfunknetzes (M) ausgebildet bzw. bereitgestellt wird, und das Mittel zur Bestimmung der durch Korrelation (K) erzeugten Daten als Passantenfrequenzdaten für den wenigstens einen geographischen Ort von einer Einrichtung (4) des Mobilfunknetzes (M) ausgebildet bzw. bereitgestellt wird.

15. System nach Anspruch 13 oder Anspruch 14, **dadurch gekennzeichnet, dass** die Datenbank mit demographischen Daten eine über das Mobilfunknetz (M) zugängliche Datenbank ist, das Mittel zur Abfrage von demographischen Daten aus der Datenbank von einer Einrichtung (4) des Mobilfunknetzes ausgebildet bzw. bereitgestellt wird, und das Mittel zur Korrelation der durch Korrelation (K) erzeugten Passantenfrequenzdaten mit demographischen Daten von einer Einrichtung (4) des Mobilfunknetzes ausgebildet bzw. bereitgestellt wird.
